# EUROPÄISCHE PATENTSCHRIFT

(11) **EP 1 396 896 B1**
(45) Veröffentlichungstag und Bekanntmachung des Hinweises auf die Patenterteilung: **10.05.2017**
(21) Anmeldenummer: 03405585.5
(22) Anmeldetag: 08.08.2003
(51) Int. Cl.: H01M 8/04

(54) **Raumheizungsystem mit Brennstoffzellen und Anschluss an ein öffentliches elektrisches Netz**
Grid-connected fuel cell system for providing heat and electrical power
Système de chauffage utilisant des piles à combustible et connexion à un réseau électrique public

(30) Priorität: 04.09.2002 EP 02405764
(43) Veröffentlichungstag der Anmeldung: 10.03.2004
(73) Patentinhaber: Hexis AG, 8404 Winterthur (CH)
(72) Erfinder: Genswein, Stefan, 79771 Erzingen (DE); Dittli, René, 8635 Dürnten (CH)
(74) Vertreter: Intellectual Property Services GmbH

(56) Entgegenhaltungen:
- EP-A- 1 205 993
- US-A- 5 985 474
- US-A- 6 093 500
- O'SULLIVAN G A: "FUEL CELL INVERTERS FOR UTILITY APPLICATIONS" 31ST.ANNUAL IEEE POWER ELECTRONICS SPECIALISTS CONFERENCE. PESC 00. CONFERENCE PROCEEDINGS. GALWAY, IRELAND, JUNE 18 - 23, 2000, ANNUAL POWER ELECTRONICS SPECIALISTS CONFERENCE, NEW YORK, NY: IEEE, US, Bd. 3 OF 3. CONF. 31, 18. Juni 2000 (2000-06-18), Seiten 1191-1194, XP000988200 ISBN: 0-7803-5693-4
- PATENT ABSTRACTS OF JAPAN vol. 015, no. 106 (E-1044), 13. März 1991 (1991-03-13) -& JP 02 311134 A (FUJI ELECTRIC CO LTD), 26. Dezember 1990 (1990-12-26)

## Beschreibung

Die Erfindung betrifft ein Raumheizungsystem mit Brennstoffzellen und Anschluss an ein öffentliches elektrisches Netz gemäss Oberbegriff von Anspruch 1 sowie ein Verfahren zum Betreiben des Systems.

Aus der EP-A-1 205 993 ist ein Raumheizungsystem bekannt, in dem mittels Hochtemperatur-Brennstoffzellen thermische und elektrische Energie aus einem Wasserstoff und Kohlenmonoxid enthaltenden Gasgemisch gewonnen und genutzt werden kann. Eine besondere Steuerung wird beschrieben, mit der ein sicherer und gefahrenfreier Betrieb des Systems gewährleistet ist. Die thermische Energie ist für eine Brauchwassererwärmung und/oder eine Raumheizung verwendbar. Die elektrische Energie lässt sich zum Betätigen von Sensoren und Aktoren (z. B. zum Betrieb von Pumpen) nutzen. Ein Überschuss dieser Energieform kann auch in ein öffentliches Netz eingespeist werden. Das Gasgemisch wird durch ein stromaufwärts vor den Brennstoffzellen angeordnetes Hauptgasventil geleitet. Die Steuerung dieses Ventils ist so ausgestaltet, das bei einem Unterbruch des für die Ventilsteuerung benötigten Stroms das Ventil schliesst und damit der energieliefernde Betrieb der Brennstoffzellen abgebrochen wird. Ein länger andauernder Unterbruch führt dazu, dass die Brennstoffzellen erkalten. Betriebsunterbrüche sind schädlich für die Brennstoffzellen; denn thermische Zyklen mit Erkalten und erneutem Aufheizen lassen die elektrochemisch aktiven Komponenten der Zellen rasch altern. Stromunterbrüche im öffentlichen Netz haben daher eine Alterung der Brennstoffzellen zur Folge, die nicht notwendigerweise auftreten müsste. Mit Hilfe von beispielsweise galvanischen Batterien oder Notstromgeneratoren könnte man bei einem Netzausfall notfalls den Betrieb des Raumheizungssystem aufrecht erhalten. Solche Stützmassnahmen bedeuten aber Mehrkosten, die nur wegen möglichen Netzausfällen entstehen; sie erfordern auch eine regelmässige Kontrolle und Wartung, z. B. Nachladen oder Auswechseln der Batterien.

Aufgabe der Erfindung ist es daher, ein Raumheizungsystem zu schaffen, in dem Massnahmen vorgekehrt sind, mittels denen bei einem Netzausfall das Betreiben des Systems fortgesetzt werden kann, wobei diese Massnahmen keine Stützmassnahmen der mit einem Wartungsaufwand verbundenen Art sein sollen. Diese Aufgabe wird durch das im Anspruch 1 definierte Raumheizungsystem gelöst.

Das Raumheizungsystem mit Brennstoffzellen hat einen Anschluss an ein öffentliches elektrisches Netz. In diesem System wird ein Brennstoff zur Erzeugung von thermischer und elektrischer Energie in Gasform durch ein Hauptgasventil den Brennstoffzellen zugeführt. Das Hauptgasventil weist eine Steuerung auf, die bei einem Unterbruch des zugeleiteten Stroms zu einer selbsttätigen Betriebseinstellung führt. Für das System bestehen die Möglichkeiten, die elektrische Energie zumindest teilweise in das Netz einzuspeisen und die thermische Energie an einen Heizkreislauf abzugeben, wobei dieser Heizkreislauf auch mit elektrischer Energie aus dem Netz betreibbar ist. Ein elektrischer Inverter, mit dem Gleichstrom der Brennstoffzellen in Wechselstrom wandelbar ist, lässt sich in zwei Betriebszuständen betreiben: einerseits für eine Speisung in das öffentliche Netz und andererseits für eine Speisung in ein Inselnetz des Systems. Hinsichtlich eines Ausfalls des öffentlichen Netzes sind Mittel vorgesehen, durch die eine kurzzeitige Aufrechterhaltung von notwendigen Funktionen des Raumheizungsystems - mit erster Priorität die Brennstoffzufuhr in die Brennstoffzellen - ohne Stützung durch beispielsweise galvanische Batterien gewährleistet ist. Ausserdem sind Steuerungen und Schaltungen vorgesehen, mit denen zumindest die notwendigen Funktionen des Raumheizungsystems mittels elektrischer Energie aus den Brennstoffzellen weiter aufrecht erhalten werden können.

Die abhängigen Ansprüche 2 bis 5 betreffen vorteilhafte Ausführungsformen des erfindungsgemässen Raumheizungsystems. Verfahren zum Betrieb des erfindungsgemässen Systems bilden den Gegenstand der Ansprüche 6 bis 10.

Nachfolgend wird die Erfindung anhand der Zeichnungen erläutert. Es zeigen:
- Fig. 1: eine schematische Darstellung eines Teils eines Raumheizungsystems und
- Fig. 2: das gesamte Raumheizungsystem, in dem Massnahmen zur Verhinderung von Betriebsunterbrüchen realisiert sind.

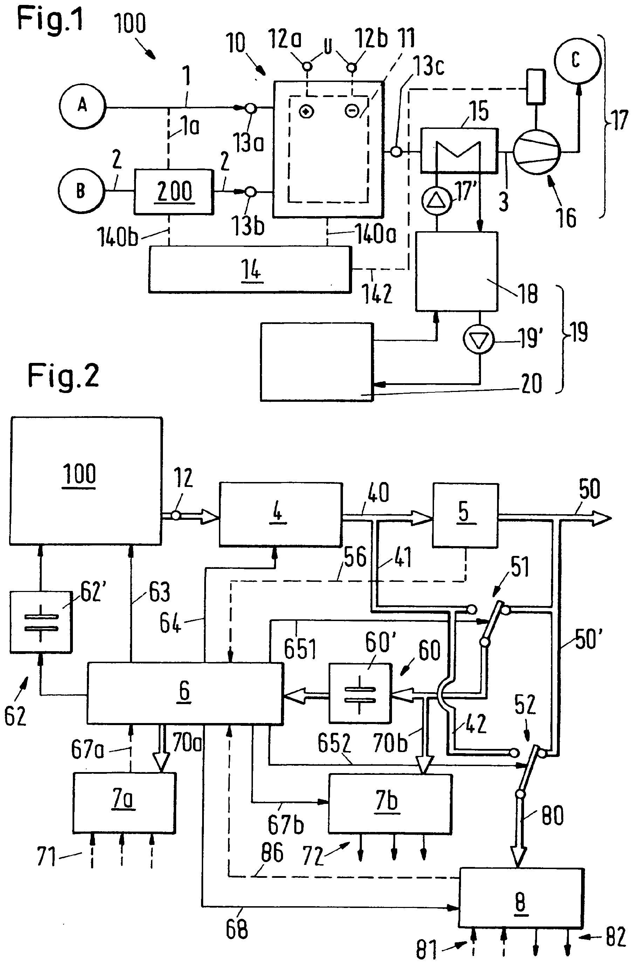

Ein in Fig. 1 dargestelltes Teilsystem 100 - ein Teil des Raumheizungsystems der Fig. 2 - ist in detailierter Form und anhand diverser Varianten in der genannten EP-A- 1 205 993 beschrieben. Es umfasst eine Brennstoffzellen-Batterie 10 mit einem Stapel 11 von in Serie geschalteten Brennstoffzellen, in der mit zwei gasförmigen Edukten A und B elektrische Energie (Spannung U) und heisses Abgas erzeugt werden. Die elektrische Energie wird über zwei Pole 12a, 12b an einen weiteren Teil des Raumheizungsystems abgegeben. Dieser ist in Fig. 2 dargestellt. Die beiden Pole 12a, 12b erscheinen dort als eine einzige Anschlussstelle, dem elektrischen Ausgang 12. Die Edukte A und B werden durch Leitungen 1 bzw. 2 und Eingänge 13a bzw. 13b in die Batterie 10 eingespeist. Das heisse Abgas wird an einem Ausgang 13c von einem Gebläse 16 abgesaugt, wobei es durch eine Leitung 3 sowie einen Wärmetauscher 15 gefördert wird. Abgekühltes Abgas C wird an die Umgebung abgegeben. Das Gebläse 16, mit dem Abgas angesaugt wird, ist aus Sicherheitsgründen stromabwärts nach der Batterie 10 angeordnet. Dieses Saugorgan könnte auch durch ein der Batterie 10 vorgeschaltetes Gebläse ersetzt werden; dann ergäbe sich allerdings im Betrieb ein Überdruck in den Brennstoffzellen.

Über einen Kreislauf 17 mit einer Pumpe 17' wird mittels einem Wärmeträger (mit Vorteil Wasser) die aus den heissen Abgasen gewonnene Abwärme von dem Wärmetauscher 15 zu einem Wärmespeicher 18 transportiert. Aus dem Speicher 18 kann die Abwärme über einen zweiten Kreislauf 19 mit einer Pumpe 19' einem Verbraucher 20, beispielsweise Heizkörpern eines Gebäudes, zugeführt werden. Die beiden Heizkreise, nämlich der Kreislauf 17 und der Kreislauf 19 werden nachfolgend als "Erzeugerkreis" bzw. "Verbraucherkreis" bezeichnet, wobei für diese Heizkreise weiterhin die Bezugszeichen 17 und 19 verwendet werden.

Das Edukt A ist in der Regel Luft, die aus der Umgebung angesaugt wird. Das Edukt B ist ein Brennstoff, der gasförmig ist oder in die Gasform gebracht worden ist. Dieses Gas wird durch einen Anlagenteil 200 geführt, in dem ein Hauptgasventil und Mittel zur Leistungssteuerung angeordnet sind (vgl. EP-A-1 205 993). Bei einem Stromunterbruch schliesst das Hauptgasventil, so dass der Batteriebetrieb gestoppt wird. Die Steuerung des Hauptgasventils wird durch einen Anlagenteil 14 ausgeübt. Diese Steuerungseinheit 14 ist über Leitungen 140a mit Sensoren der Batterie 10, über Leitungen 140b mit dem Anlagenteil 200 und über Leitungen 142 mit dem Gebläse 16 verbunden. Die Einspeisungen der Edukte A und B sind über eine Verbindung 1 a und den Anlagenteil 200 miteinander gekoppelt.

Die für die Erfindung charakteristischen Merkmale sind in Fig. 2 dargestellt. Dabei sind Leitungen für Leistungstransporte mit Doppellinien angegeben, Leitungen für Ansteuerungen (Aktoren) mit einfachen Linien und Leitungen für Informationsübermittlungen (Sensoren) mit gestrichelten Linien. Die Teilanlage 100 der Fig. 1 ist über den elektrischen Ausgang 12 an einen elektrischen Inverter 4 angeschlossen, mit welchem Gleichstrom der Brennstoffzellen in Wechselstrom umgewandelt wird. Der Inverter 4 lässt sich in zwei Betriebszuständen betreiben. In dem einen Zustand wird der Wechselstrom über Leitungen 40, 50 in das öffentliche Netz eingespeist; im anderen Zustand wird der Wechselstrom über eine Leitung 41 in ein Inselnetz eingespeist, das zum erfindungsgemässen System gehört. Für den Fall, dass sich ein Stromunterbruch im öffentlichen Netz ereignet, ist zwischen den Leitungen 40 und 50 eine "Netzfreischaltung" angeordnet, nämlich ein Gerät 5, mit dem die Einspeisung des Wechselstroms in das Netz abgebrochen wird und geeignete Operationen im Inselnetz eingeleitet werden.

Das Inselnetz befindet sich in einem programmierten Zustand, der durch eine Systemsteuerung 6 eingestellt wird. Die Systemsteuerung 6 umfasst auch ein Energiemanagement der Raumheizung, mit dem beispielsweise der Ladungszustand des Wärmespeichers 18 bewirtschaftet wird. Mittels der Systemsteuerung 6 können ein erster Schalter 51 (Ansteuerung 651) und ein zweiter Schalter 52 (Ansteuerung 652) betätigt werden. Das Hauptgasventil und die Leistungssteuerung des Teilsystems 100 (Anlagenteil 200) sind jeweils über eine Ansteuerleitung 62 bzw. 63 mit der Systemsteuerung 6 verbunden. Eine weitere Ansteuerleitung 64 führt zum Inverter 4. Die Netzfreischaltung 5 und die Systemsteuerung 6 sind über eine Informationsleitung 56 verbunden. Die Ansteuerleitung 62 umfasst eine "Netzausfall-Überbrückung", durch die eine kurzzeitige Aufrechterhaltung von notwendigen Funktionen des Raumheizungsystems - mit erster Priorität die Brennstoffzufuhr in die Brennstoffzellen - ohne Stützung durch beispielsweise galvanische Batterien gewährleistet ist.

Zwischen System-Sensoren 7a, die dem Erzeugerkreis 17 zugeordnet sind (Pfeile 71), sowie System-Aktoren 7b, die ebenfalls dem Erzeugerkreis 17 zugeordnet sind (Pfeile 72), und der Systemsteuerung 6 bestehen Leitungen 67a, 70a bzw. 67b. Für eine Einspeisung von Wechselstrom aus dem öffentlichen Netz oder aus dem Inverter 4 in die Systemsteuerung 6 besteht eine Leitung 60, in der auch eine "Netzausfall-Überbrückung" 60' vorgesehen ist. Über eine Abzweigleitung 70b werden die System-Aktoren 7b mit elektrischer Energie versorgt. Schliesslich ist die Systemsteuerung 6 über Leitungen 86 und 68 mit einem Systemteil 8 verbunden, der Sensoren und Aktoren für den Verbraucherkreis 19 (Pfeile 81 bzw. 82) enthält. Der für diesen Systemteil 8 benötigte Wechselstrom wird über die am Schalter 52 anknüpfende Leitung 80 zugeführt. Der Wechselstrom kann aus dem Netz (Leitung 50') oder aus dem Inverter 4 (Leitung 42) bezogen werden.

Der Inverter 4 ist von dem einen Betriebszustand in den anderen innerhalb einer relativ kurzen Zeitdauer Δt umschaltbar. Diese Zeitdauer Δt ist nicht grösser als ungefähr 0,1 Sekunde. Die Stromzufuhr der Ventilsteuerung durch die Ansteuerleitung 62 ist während einer Zeitdauer, die grösser als Δt ist, durch einen Puffer, der beispielsweise einen Kondensator 62' umfasst, so gesichert, dass die Brennstoffzufuhr in die Brennstoffzellen ohne Unterbruch erfolgt.

Das erfindungsgemässe Raumheizungsystem kann nach folgenden drei Modi betrieben werden:
Modus M1: Die Schalter 51 und 52 haben die in Fig. 2 dargestellten Zustände. Die Teilanlage 100 mit der Batterie 10 ist nicht im Betrieb, oder sie wird eben erst in Betrieb genommen. Die von der Batterie 10 abgegebene elektrische Leistung ist kleiner als 100 W (Dies ist ein illustratives Zahlenbeispiel, das im Folgenden beibehalten wird. Die Grösse von 100 W kann auch modifiziert werden. Dies gilt auch für weitere Grössenangaben.) Der Inverter 4 ist in seinem ersten Betriebszustand. Die gesamte erzeugte elektrische Leistung wird in das öffentliche Netz eingespeist. Der Erzeugerkreis 17 und der Verbraucherkreis 19 erhalten elektrische Leistung aus dem Netz.
Modus M2: Die elektrische Leistung des Teilsystems 100 ist grösser als 100 W und kleiner als 200 W. Der Schalter 51 ist umgelegt und der Inverter 4 erzeugt genügend Wechselstrom, so dass die Systemsteuerung 6 und die Aktoren 7b direkt aus dem Inverter 4 gespeist werden können.
Modus M3: Die elektrische Leistung der Brennstoffzellen ist grösser als 200 W. Der Inverter 4 erzeugt genügend Wechselstrom, um sowohl den Erzeugerkreis 17 als auch den Verbraucherkreis 19 zu versorgen. Dazu wird der Schalter 52 so betätigt, dass auch dem Verbraucherkreis 19 elektrische Energie aus dem Inverter zuführbar wird. Der Verbraucherkreis 19 umfasst Mittel für den Weitertransport von Wärme aus dem Wärmespeicher 18 zu dem Verbraucher 20 und für eine Steuerung dieses Wärmetransports.

Bei einem Netzausfall trennt die Netzfreischaltung 5 die Leitungen 40 und 50; der Schalter 51 wird umgelegt, so dass die Systemsteuerung 6 und die Aktoren 7b direkt aus dem Inverter 4 gespeist werden können. Während der Umschaltzeit Δt sorgen einerseits die Netzausfallüberbrückung der Zuführleitung 60 dafür, dass die Systemsteuerung 6 bis nach einem Umschalten des Inverters 4 notwendige Funktionen des Raumheizungsystems aufrecht erhält, und andererseits die Netzausfallüberbrückung der Leitung 62 dafür, dass das Hauptgasventil (für das Edukt B) auch bei einem kurzen Ausfall der Stromversorgung weiter geöffnet bleibt. Der Betrieb des Erzeugerkreises 17 bleibt während der Umschaltzeit Δt unterbrochen. Der Verbraucherkreis 19 darf nach dem Netzausfall dank einer thermischen Pufferwirkung des Verbrauchers 20 (beheiztes Gebäude) einige Minuten ausser Betrieb sein. Diese Zeit reicht aus, um die Gaszufuhr zu steigern und so die Erzeugung der elektrischen Leistung in einem ausreichenden Mass zu erhöhen. Diese Leistung muss einen Schwellwert N2 überschreiten.

Für die mit den Brennstoffzellen erzeugte elektrische Leistung gibt es zwei Schwellwerte N1 und N2, die aufgrund von Eigenschaften des Systems vorgegeben sind, nämlich dem Bedarf an Leistung zum Betreiben des Erzeugerkreises 17 und dem Bedarf an Leistung zum Betreiben beider Heizkreise 17 und 19. Im oben beschriebenen Zahlenbeispiel ist N1 = 100 W und N2 = 200 W. Je nach Leistungsbedarf in Bezug auf die zwei Schwellwerte wird der Betrieb in einem der drei Modi geführt, wobei durch die Systemsteuerung 6 die beiden Schalter 51, 52 entsprechend dem zu wählenden Modus geschaltet sind. Damit bei einem Netzausfall die Anlage nicht abschaltet, wird von der Systemsteuerung die Gaszufuhr so gesteuert, dass der Schwellwert N1 dauernd überschritten ist. Durch das Aufteilen des Betriebs in Modi mittels der Schwellwerte N1 und N2 lässt sich die Gaszufuhr in einem weiten Bereich modulieren.

Den drei Modi entsprechend ergeben sich auch verschiedene Verfahren des Betriebs:
Die mit den Brennstoffzellen erzeugte elektrische Leistung ist kleiner als N1 (Modus M1). Diese Leistung reicht nicht aus für ein Betreiben aller Komponenten des Systems. Strom wird daher aus dem öffentlichen Netz bezogen.

Die mit den Brennstoffzellen erzeugte elektrische Leistung ist grösser als N1 (Modus M2). Diese Leistung wird an den Erzeugerkreis 17 abgegeben. Falls die Netzfreischaltung 5 die Leitungen 40 und 50 verbindet, wird die überschüssige Leistung an das öffentliche Netz abgegeben.

Die mit den Brennstoffzellen erzeugte elektrische Leistung ist grösser als N2 (Modus M3). Diese Leistung wird an den Erzeugerkreis, den Verbraucherkreis und - falls die Netzfreischaltung 5 die Leitungen 40 und 50 verbindet - an das öffentliche Netz abgegeben.

## Patentansprüche

1. Raumheizungsystem mit Hochtemperatur-Brennstoffzellen (11) und Anschluss an ein öffentliches elektrisches Netz (50), in welchem System ein Brennstoff (B) zur Erzeugung von thermischer und elektrischer Energie in Gasform durch ein Hauptgasventil (200) den Brennstoffzellen zuführbar ist, wobei das Hauptgasventil eine Steuerung aufweist, die bei einem Unterbruch des zugeleiteten Stroms zu einer selbsttätigen Betriebseinstellung führt, und wobei für das System die Möglichkeiten bestehen, die elektrische Energie zumindest teilweise in das Netz einzuspeisen und die thermische Energie an einen Heizkreislauf abzugeben, der mit elektrischer Energie aus dem Netz betreibbar ist,
**dadurch gekennzeichnet, dass** ein elektrischer Inverter (4), mit dem Gleichstrom der Brennstoffzellen in Wechselstrom wandelbar ist, sich in zwei Betriebszuständen betreiben lässt, einerseits ein erster Betriebszustand für eine Speisung in das öffentliche Netz, während dem das Raumheizungssystem elektrische Energie aus dem öffentlichen Netz bezieht, und andererseits ein zweiter Betriebszustand für eine Speisung in ein Inselnetz des Systems, mit dem das Raumheizungssystem zumindest teilweise betreibbar ist, und dass für ein Vorliegen des ersten Betriebszustand und hinsichtlich eines Ausfalls des öffentlichen Netzes Mittel vorgesehen sind, durch die eine kurzzeitige Aufrechterhaltung von notwendigen Funktionen des Raumheizungsystems - mit erster Priorität die Brennstoffzufuhr in die Brennstoffzellen - ohne Stützung durch beispielsweise galvanische Batterien gewährleistet ist, sowie Steuerungen und Schaltungen vorgesehen sind, mit denen zumindest die notwendigen Funktionen des Raumheizungsystems mittels elektrischer Energie aus den Brennstoffzellen weiter aufrecht erhaltbar sind.

2. Raumheizungsystem nach Anspruch 1, **dadurch gekennzeichnet, dass** der Inverter (4) von dem einen Betriebszustand in den anderen innerhalb einer relativ kurzen Zeitdauer Δt umschaltbar ist, dass diese Zeitdauer Δt insbesondere nicht grösser als 0,1 Sekunde ist, und dass die Stromzufuhr der Steuerung des Hauptgasventils durch einen Puffer, der beispielsweise einen Kondensator (62') umfasst, während einer Zeitdauer grösser als Δt so gesichert ist, dass die Brennstoffzufuhr in die Brennstoffzellen ohne Unterbruch erfolgt, und dass die Stromzufuhr einer Systemsteuerung (6) durch einen Puffer, der beispielsweise einen weiteren Kondensator (60') umfasst, auch so gesichert ist, dass die Systemsteuerung funktionsfähig bleibt.

3. Raumheizungsystem nach Anspruch 2, **dadurch gekennzeichnet, dass** ein Erzeugerkreis (17) und ein an diesen angeschlossenen Verbraucherkreis (19) vorgesehen sind, wobei der Erzeugerkreis einen Heizkreislauf umfasst zum Transportieren von Abwärme, die in einem Wärmetauscher (15) aus heissen Abgasen der Brennstoffzellen gewinnbar ist, und dass der Erzeugerkreis aufgrund des einen Betriebszustands des Inverters mittels elektrischer Energie aus den Brennstoffzellen (11) betreibbar ist.

4. Raumheizungsystem nach Anspruch 3, **dadurch gekennzeichnet, dass** der Erzeugerkreis (17) einen Wärmespeicher (18) umfasst, dass mit dem Verbraucherkreis (19) Wärme aus diesem Wärmespeicher zu einem Verbraucher (20), insbesondere zu Heizkörpern der Raumheizung, transportierbar ist und dass für den Fall eines länger bestehenden Ausfalls des öffentlichen Netzes und bei einem ausreichenden Angebot an elektrischer Energie durch die Brennstoffzellen (11), der Verbraucherkreis mit der durch die Brennstoffzellen gelieferten elektrischen Leistung in Funktion setzbar ist.

5. Raumheizungsystem nach einem der Ansprüche 1 bis 4, **dadurch gekennzeichnet, dass** ein elektrisches Inselnetz, eine Systemsteuerung (6) und zwei Schalter (51, 52) Komponenten des Systems sind, dass die Schalter in Wirkverbindungen mit der Systemsteuerung stehen und dass je nach Einstellung der Schalter das System in einem von drei Modi betreibbar ist.

6. Verfahren zum Betreiben des Systems gemäss einem der Ansprüche 1 bis 5, wobei ein Brennstoff (B) zur Erzeugung von thermischer und elektrischer Energie in Gasform durch ein Hauptgasventil (200) den Brennstoffzellen zugeführt wird, dass das Hauptgasventil eine Steuerung aufweist, die bei einem Unterbruch des zugeleiteten Stroms zu einer selbsttätigen Betriebseinstellung führt, dass für die mit den Brennstoffzellen erzeugte elektrische Leistung zwei Schwellwerte N1 und N2 aufgrund von Eigenschaften des Systems vorgegeben sind und dass je nach Leistung in Bezug auf die zwei Schwellwerte der Betrieb in einem von drei Modi geführt wird, wobei durch eine Systemsteuerung zwei Schalter entsprechend dem zu wählenden Modus geschaltet werden und der erste Schwellwert N1 kleiner als der zweite Schwellwert N2 ist, dass ferner bei einem Ausfall des öffentlichen Netzes eine kurzzeitige Aufrechterhaltung von notwendigen Funktionen des Raumheizungsystems - mit erster Priorität die Brennstoffzufuhr in die Brennstoffzellen - ohne Stützung durch beispielsweise galvanische Batterien gewährleistet wird und dass, falls erforderlich, die elektrische Leistung über den Schwellwert N1 erhöht wird.

7. Verfahren nach Anspruch 6, **dadurch gekennzeichnet, dass** die mit den Brennstoffzellen erzeugte elektrische Leistung kleiner als N1 ist und diese gesamte Leistung an das öffentliche Netz abgegeben wird, während die Leistung für ein Betreiben aller Komponenten des Systems aus dem öffentlichen Netz bezogen wird.

8. Verfahren nach Anspruch 6, **dadurch gekennzeichnet, dass** die mit den Brennstoffzellen erzeugte elektrische Leistung grösser als N1 ist und dass diese Leistung an einen Erzeugerkreis (17) und - falls möglich - an das öffentliche Netz abgegeben wird.

9. Verfahren nach Anspruch 8, **dadurch gekennzeichnet, dass** die mit den Brennstoffzellen erzeugte elektrische Leistung grösser als N2 ist und dass diese Leistung an den Erzeugerkreis (17), einen Verbraucherkreis (19) und - falls möglich - an das öffentliche Netz abgegeben wird.

10. Verfahren nach einem der Ansprüche 6 bis 9, **dadurch gekennzeichnet, dass** bei einem Ausfall des öffentlichen Netzes das System in einem der beiden Modi betrieben, gegebenenfalls in einen solchen versetzt wird, in denen die mit den Brennstoffzellen erzeugte elektrische Leistung grösser als N1 ist.

## Claims

1. A space heating system with high-temperature fuel cells (11) and a connection to a public electrical network (50), in which system a fuel (B) can be supplied to the fuel cells in gaseous form through a main gas valve (200) for the production of thermal and electrical energy, with the main gas valve having a control which, on an interruption of the current supplied, results in an automatic operating shutdown, and with possibilities existing for the system to feed the electrical energy at least partly into the network and to deliver the thermal energy to a heating circuit which is operable with electrical energy from the network,
**characterized in that** an electrical inverter (4), with which direct current of the fuel cells can be converted into alternating current, can be operated in two operating states, on the one hand, a first operating state for a feed into the public network during which the space heating system draws electrical energy from the public network and, on the other hand, a second operating state for a feed into an island network of the system with which the space heating system can at least partly be operated; and **in that** means are provided for a presence of the first operating state and with respect to a power cut of the public network by which a short-term maintenance of necessary functions of the space heating system - the fuel supply into the fuel cells having first priority - is ensured without support by, for example, galvanic batteries; and **in that** controls and circuits are provided with which at least the necessary functions of the space heating system can continue to be maintained by means of electrical energy from the fuel cells.

2. A space heating system in accordance with claim 1, **characterised in that** the inverter (4) can be switched from the one operating state into the other within a relatively short time period Δt; **in that** this time period Δt is, in particular, not larger than 0.1 seconds; and **in that** the power supply to the control of the main gas valve is secured for a time period larger than Δt by a buffer, which for example includes a capacitor (62'), such that the fuel supply into the fuel cells takes place without interruption; and **in that** the power supply to a system control (6) is also secured by a buffer, which for example includes a further capacitor (60'), such that the system control remains functional.

3. A space heating system in accordance with claim 2, **characterised in that** a producer circuit (17) and a consumer circuit (19) connected thereto are provided, with the producer circuit including a heating circuit for the transporting of waste heat which can be recovered in a heat exchanger (15) from hot exhaust gases of the fuel cells; and **in that** the producer circuit can be operated by means of electrical energy from the fuel cells (11) on the basis of the one operating state of the inverter.

4. A space heating system in accordance with claim 3, **characterized in that** the producer circuit (17) includes a heat accumulator (18); **in that** heat can be transported from this heat accumulator to a consumer (20), in particular to radiators of the space heating, by the consumer circuit (19); and **in that**, for the case of a longer power cut of the public network and with a sufficient supply of electrical energy by the fuel cells (11), the consumer circuit can be set in operation by the electrical power delivered by the fuel cells.

5. A space heating system in accordance with any one of claims 1 to 4, **characterised in that** an electrical island network, a system control (6) and two switches (51, 52) are components of the system; **in that** the switches are operatively connected to the system control; and **in that** the system can be operated in one of three modes depending on the setting of the switches.

6. A method for operating the system in accordance with any one of claims 1 to 5, wherein a fuel (B) is supplied in gaseous form to the fuel cells through a main gas valve (200) for the production of thermal and electrical energy; wherein the main gas valve has a control which results in an automatic operating shutdown on an interruption of the current supplied; wherein two threshold values N1 and N2 are pre-set on the basis of properties of the system for the electrical power produced with the fuel cells; wherein the operation is carried out in one of three modes depending on the power with respect to the two threshold values, with two switches being switched according to the mode to be selected by a system control and with the first threshold value N1 being smaller than the second threshold value N2: wherein, furthermore, on a power cut of the public network, a short-term maintenance of necessary functions of the space heating system is ensured - the fuel supply into the fuel cells having first priority - without support by, for example, galvanic batteries; and wherein, if necessary, the electrical power is increased above the threshold value N1.

7. A method in accordance with claim 6, **characterized in that** the electrical power produced with the fuel cells is less than N1 and this total power is delivered to the public network, while the power for an operation of all components of the system is taken from the public network.

8. A method in accordance with claim 6, **characterized in that** the electrical power produced with the fuel cells is larger than N1; and **in that** this power is delivered to a producer circuit (17) and - if possible - to the public network.

9. A method in accordance with claim 8, **characterized in that** the electrical power produced with the fuel cells is larger than N2; and **in that** this power is delivered to the producer circuit (17), to a consumer circuit (19) and - if possible - to the public network.

10. A method in accordance with any one of claims 6 to 9, **characterized in that**, on a power cut of the public network, the system is operated in one of the two modes, and is optionally set into one such mode, in which the electrical power produced with the fuel cells is greater than N1.

## Revendications

1. Système de chauffage de locaux ayant des piles à combustible haute température (11) et une connexion à un réseau électrique public (50), système dans lequel un combustible (B) pour la production d'énergie thermique et électrique sous forme gazeuse peut être alimenté travers une vanne de gaz principale (200) des piles à combustible, dans lequel la vanne de gaz principale comprend une commande qui, par une interruption du flux fourni, mène à un arrêt de fonctionnement automatique, et dans lequel il existe pour le système les possibilités d'alimenter l'énergie électrique au moins partiellement dans le réseau électrique et de fournir l'énergie thermique à un circuit de chauffage, qui peut fonctionner avec l'énergie électrique provenant du réseau,
**caractérisé en ce que** un onduleur électrique (4), à l'aide duquel du courant continu des piles à combustible peut être converti en courant alternatif, peut être utilisé dans deux états fonctionnement, d'une part un premier état de fonctionnement pour une alimentation dans le réseau public, et d'autre part un second état de fonctionnement pour une alimentation dans un réseau en îlot du système, à l'aide duquel le système de chauffage de locaux peut fonctionner, au moins partiellement, et **en ce que** des moyens sont prévus pour l'existence d'un premier état de fonctionnement et concernant une défaillance du réseau public, par l'intermédiaire desquels une brève maintenance de fonctions nécessaires du système de chauffage de locaux - la première priorité étant la fourniture de combustible dans les piles à combustible - est garantie sans support de batteries par exemple galvaniques, des commandes et circuits étant également prévus, à l'aide desquels les fonctions nécessaires du système de chauffage de locaux peuvent continuer d'être maintenues grâce à l'énergie électrique provenant des piles à combustible.

2. Système de chauffage de locaux selon la revendication 1, **caractérisé en ce que** l'onduleur (4) peut être commuté d'un état de fonctionnement à l'autre en une durée relativement courte Δt, **en ce que** cette durée Δt n'est de préférence pas supérieure à 0,1 seconde, et **en ce que** l'alimentation électrique de la commande de la vanne de gaz principale est assurée par un tampon, qui comprend par exemple un condensateur (62'), pendant une durée supérieure à Δt de telle sorte que l'alimentation de combustible dans les piles à combustible est assurée sans interruption, et **en ce que** l'alimentation électrique d'une commande de système (6) est assurée par un tampon, qui comprend par exemple un autre condensateur (60'), de telle sorte que la commande de système reste fonctionnelle.

3. Système de chauffage de locaux selon la revendication 2, **caractérisé en ce qu'**un circuit générateur (17) et un circuit consommateur (19) connecté à celui-ci sont prévus, dans lequel le circuit générateur comprend un circuit de chauffage pour le transport de chaleur perdue, qui peut être obtenue dans un échangeur de chaleur (15) à partir de gaz d'échappement chauds des piles à combustible, et **en ce que** le circuit générateur peut être actionné par l'intermédiaire de l'énergie électrique provenant des piles à combustible (11) en raison d'un état de fonctionnement de l'onduleur.

4. Système de chauffage de locaux selon la revendication 3, **caractérisé en ce que** le circuit générateur (17) comprend un accumulateur de chaleur (18), **en ce que** de la chaleur provenant de l'accumulateur de chaleur peut être transportée via le circuit consommateur (19) jusqu'à un consommateur (20), en particulier des radiateurs de chauffage de locaux, et **en ce que** pour le cas d'une plus longue coupure du réseau public, et avec une alimentation suffisante d'énergie électrique par les piles à combustible (11), le circuit consommateur peut être mis en fonctionnement par la puissance électrique délivrée par les piles à combustible.

5. Système de chauffage de locaux selon l'une quelconque des revendications 1 à 4, **caractérisé en ce qu'**un réseau électrique en îlot, une commande de système (6) et deux commutateurs (51, 52) sont des composants du système, **en ce que** les commutateurs sont en liaison opérationnelle avec la commande de système, et **en ce que** le système peut être actionné dans l'un de trois modes selon le réglage des commutateurs.

6. Procédé pour faire fonctionner le système selon l'une quelconque des revendications 1 à 5, dans lequel un combustible (B) pour la production d'énergie thermique et électrique sous forme gazeuse peut être alimenté travers une vanne de gaz principale (200) des piles à combustible, la vanne de gaz principale comprend une commande qui, par une interruption du flux fourni, mène à un arrêt de fonctionnement automatique, deux valeurs de seuil N1 et N2 sont déterminées pour la puissance électrique générée par les piles à combustible en raison de caractéristique du système, et en fonction de la puissance par rapport aux deux valeurs de seuil, le fonctionnement est mené dans l'un de trois modes, dans lequel par l'intermédiaire d'une commande de système, deux commutateurs sont commutés en correspondance avec le mode à sélectionner, et la première valeur de seuil N1 est inférieure à la seconde valeur de seuil N2, et en outre lors d'une défaillance du réseau public, une brève maintenance de fonctions nécessaires du système de chauffage de locaux - la première priorité étant la fourniture de combustibles dans les piles à combustible - est garantie sans support de batteries par exemple galvaniques, et dans lequel, le cas échéant, la puissance électrique est augmentée au-dessus de la valeur de seuil N1.

7. Procédé selon la revendication 6, **caractérisé en ce que** la puissance électrique générée par les piles à combustible est inférieure à N1, et cette puissance est fournie en totalité au réseau public, tandis que la puissance pour un fonctionnement de tous les composants du système est obtenue à partir du réseau public.

8. Procédé selon la revendication 6, **caractérisé en ce que** la puissance électrique générée par les piles à combustible est supérieure à N1, et **en ce que** cette puissance est fournie à un circuit générateur (17) et - dans la mesure du possible - au réseau public.

9. Procédé selon la revendication 8, **caractérisé en ce que** la puissance électrique générée par les piles à combustible est supérieure à N2, et **en ce que** cette puissance est fournie à un circuit générateur (17), un circuit consommateur (19) et - dans la mesure du possible - au réseau public.

10. Procédé selon l'une quelconque des revendications 6 à 9, **caractérisé en ce qu'**en cas de défaillance du réseau public, le système fonctionne dans un des deux modes, et est établi facultativement dans un mode dans lequel la puissance électrique générée par les piles à combustible est supérieure à N1.
